# EUROPÄISCHE PATENTSCHRIFT

(11) **EP 0 975 900 B1**
(45) Veröffentlichungstag und Bekanntmachung des Hinweises auf die Patenterteilung: **11.06.2003**
(21) Anmeldenummer: 98929215.6
(22) Anmeldetag: 07.04.1998
(51) Int. Cl.: F16G 13/16

(54) **ENERGIEFÜHRUNGSKETTE**
POWER SUPPLY CHAIN
CHAINE DE GUIDAGE D'ELEMENTS DE TRANSPORT D'ENERGIE

(30) Priorität: 14.04.1997 DE 19715531
(43) Veröffentlichungstag der Anmeldung: 02.02.2000
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Stachow, E.-W., Prof. Dr.
(86) Internationale Anmeldenummer: DE9801004
(87) Internationale Veröffentlichungsnummer: WO98046906

(56) Entgegenhaltungen:
- EP-A- 0 499 784
- DE-A- 4 325 259
- US-A- 4 590 961

## Beschreibung

Die Erfindung betrifft eine Energieführungskette zur Führung von Schläuchen, Kabeln und dergleichen zwischen zwei relativ zueinander beweglichen Anschlußstellen, wobei die Kette ein etwa geradliniges Untertrum aufweist, an das sich ein Umlenkbereich und ein freitragender Bereich des Obertrums anschließt, mit mehreren durch obere und untere Querstege lösbar verbundenen Kettenlaschen, die zu zwei parallelen Strängen zusammengesetzt sind, wobei sich die Kettenlaschen gegenseitig überlappen sowie um Schwenkachsen abwinkelbar sind, wobei in jedem Laschenstrang als Innenlasche mit innenliegenden Überlappungsbereichen und Außenfläche mit außenliegenden Überlappungsbereichen ausgebildete Kettenlaschen miteinander abwechseln und Innen- und Außenlaschen sich in den parallelen Laschensträngen jeweils gegenüberliegen, in den Überlappungsbereichen aneinander anschließender Kettenlaschen Anschläge mit jeweils ersten Anschlagflächen zur Begrenzung der Krümmung des Umlenkbereichs und zweiten Anschlagflächen zur Begrenzung der Krümmung des freitragenden Bereichs des Obertrums vorgesehen sind und wobei die Anschlagflächen der Innenlaschen unsymmetrisch in bezug auf eine Spiegelung an der die Schwenkachsen enthaltenden Mittelebene angeordnet sind.

Derartige Energieführungsketten erfordern in Abhängigkeit ihres Einsatzes unterschiedliche Krümmungsradien des Umlenkbereichs und auch unterschiedliche Krümmungen des Obertrums. So ist der Verlauf des Obertrums im wesentlichen abhängig von der Länge des Verfahrweges, der Belastung und anderen Randbedingungen beim Einsatz der Ketten. Hierbei werden Ketten mit einem freitragenden Obertrum von Ketten mit einem (an einen freitragenden Bereich hinter dem Umlenkbereich anschließenden) gleitenden Obertrum unterschieden. Bei freitragendem Obertrum hängt die Energieführungskette frei über dem Untertrum und dem Boden. Die Krümmung des freitragenden Obertrums kann unterschiedlich sein. Eine Überhöhung des Obertrums im Bereich der freitragenden Länge wird als Vorspannung bezeichnet. Auch ist ein gerades oder ein durchhängendes Obertrum bei einer freitragenden Kette möglich. Bei einem gleitenden Obertrum ist die Energieführungskette im Umlenkbereich deutlich mehr als 180° geneigt, so daß das Obertrum nach einer gewissen Wegstrecke auf dem Untertrum liegt. Bei Ketten mit einem gleitenden Obertrum ist die Strecke, nach der das Obertrum auf dem Untertrum bzw. dem Boden liegt, durch die Krümmung des Obertrums bestimmt. Um bei einer Kette mit gleitendem Obertrum zu vermeiden, daß diese durch die beim Verfahren auftretenden Zug- und Schubkräfte in Zusammenspiel mit eventuell vorhandenen Unebenheiten in der Gleitschiene oder in dem Untertrum, auf denen das Obertrum gleitet, hochschnellt, weist bei langen Verfahrwegen das Obertrum keine Vorspannung auf.

Das Krümmungsverhalten der Energieführungskette wird im wesentlichen durch die Anordnung der Anschläge und das Gewicht der Kette sowie der darin geführten Leitungen bestimmt.

Derartige Energieführungsketten sind aus der den Oberbegriff des Anspruchs 1 bildenden DE 43 25 259 A1 bekannt. Die Ketten bestehen aus Kettenlaschen, die lösbar durch Querstege miteinander verbunden sind. Die zu einem Strang zusammengesetzten Kettenlaschen sind gegeneinander abwinkelbar. Hierbei gibt es Innenlaschen und Außenlaschen als verschiedene Typen von Kettenlaschen. Die Typen unterscheiden sich u.a. durch die Anordnung der Überlappungsbereiche, in denen sie abwinkelbar aneinander umgelenkt sind. Ausgehend von zwei zueinander parallel angeordneten Kettensträngen, die einen Führungsholraum bilden, sind die Innenlaschen bzw. Außenlaschen diejenigen Kettenlaschen, die im Überlappungsbereich innen bzw. außen angeordnet sind. In den Überlappungsbereichen der Kettenlaschen sind Anschläge ausgebildet, die die Abwinklung der Kettenlaschen gegeneinander begrenzen. Hierbei sind die Anschläge der Außenlaschen symmetrisch in bezug auf eine Spiegelung an der die Schwenkachsen enthaltenden Mittelebene angeordnet. Die Anschläge der Innenlaschen sind unsymmetrisch in bezug auf eine Spiegelung an dieser Mittelebene angeordnet.

Bei den bekannten Energieführungsketten ist es nachteilig, daß für unterschiedliche Krümmungen des Umlenkbereichs oder des freitragenden Bereichs des Obertrums jeweils unterschiedliche Innen- und Außenlaschen bereitgestellt werden müssen, was die Herstellungs- und Lagerhaltungskosten erhöht.

Von diesem Stand der Technik ausgehend liegt der Erfindung die Aufgabe zugrunde, Energieführungsketten mit unterschiedlichen Umlenkradien oder verschiedenen Verläufen des Obertrums bereitzustellen, die mit geringem Aufwand und kostengünstig herstellbar sind.

Erfindungsgemäß wird die Aufgabe bei einer gattungsgemäßen Kette dadurch gelöst, daß auch die Anschlagflächen der Außenlaschen unsymmetrisch in bezug auf eine Spiegelung an der Mittelebene angeordnet sind, so daß bei einer 180°-Umorientierung entweder der Innenlaschen oder der Außenlaschen um die in der Mitte zwischen den beiden Schwenkachsen und zu diesen parallel verlaufende Mittelachse der freitragende Teil des Obertrums und/oder der Umlenkbereich eine andere Krümmung aufweist.

Unter der erwähnten 180°-Umorientierung wird verstanden, daß die betreffenden Laschen (Innen- bzw. Außenlaschen) in einer um 180° um die genannte Mittelachse gedrehten Position in der Kette angeordnet werden, während die anderen Laschen (Außen- bzw. Innenlaschen) ihre Position beibehalten.

Aufgrund der erfindungsgemäßen unsymmetrischen Anordnung der Anschlagflächen von Innen- und Außenlaschen können mit nur zwei unterschiedlichen Laschen, nämlich den Innen- und Außenlaschen, zwei verschiedene Krümmungsradien für den freitragenden Teil des Obertrums und/oder den Umlenkbereich der Kette realisiert werden. Bei dem vorstehend beschriebenen Stand der Technik sind dazu mindestens drei verschiedene Laschen erforderlich.

In einer bevorzugten Ausführung der Erfindung sind die Anschlagflächen von Innen- und Außenlaschen so unsymmetrisch zur Mittelebene angeordnet, daß nach einer 180°-Umorientierung entweder der Innen- oder der Außenlaschen um die Mittelachse der Umlenkbereich eine geringfügig andere Krümmung aufweist. Damit kann man z.B. von einem freitragenden geraden Obertrum mit Vorspannung zu einem freitragenden Obertrum mit Durchhang übergehen und umgekehrt. Der Wechsel kann auch zwischen anderen Krümmungsverläufen des Obertrums erfolgen.

In einer vorteilhaften Weiterbildung der erfindungsgemäßen Energieführungskette sind die Anschläge in den Überlappungsbereichen spiegelsymmetrisch in bezug auf die senkrecht zur Kettenlängsrichtung verlaufende Mittelebene der Laschen angeordnet. Aufgrund dieser Konstruktion können die in den Kettensträngen gegenüberliegenden Laschen aus jeweils baugleichen Innen- und Außenlaschen zusammengesetzt werden, was den Herstellungs- und Montageaufwand vermindert. Ferner hat dies den Vorteil, daß durch die baugleichen, in den beiden Kettensträngen gegenüberliegenden Innen- und Außenlaschen ein optimaler Geradeauslauf der Kette gewährleistet ist, da sich Fertigungsfehler unterschiedlich hergestellter gegenüberliegender Laschen nicht aufsummieren können.

Insbesondere können die zur 180°-Umorientierung vorgesehenen Laschen die Außenlaschen der Energieführungskette sein.

In einer bevorzugten Ausführung weisen die Anschlagflächen der Innenlaschen eine relativ starke Asymmetrie in bezug auf eine Spiegelung an der die Schwenkachsen enthaltenden Mittelebene auf, während die Anschlagflächen der Außenlaschen geringfügig asymmetrisch bezüglich dieser Mittelebene angeordnet sind. Eine 180°-Umorientierung der Außenlaschen kann dann zu der gewünschten Änderung des Verlaufs des Obertrums führen. Hierbei findet zwar auch eine Änderung des Krümmungsradius der Energieführungskette im Umlenkbereich statt, die jedoch bei einer nicht zu großen Asymmetrie der Anschlagflächen im Bereich der zulässigen Toleranzen liegt.

Bei dieser Ausführung können die ersten Anschlagflächen der Außenlaschen parallel und die zweiten Anschlagflächen der Außenlaschen geringfügig geneigt zu der die Schwenkachsen enthaltenden Mittelebene angeordnet sein.

Zur besseren Handhabung und Feststellung der Orientierung der Kettenlaschen in bezug auf die die Schwenkachsen enthaltende Mittelebene sind auf den außenliegenden Seiten der Laschenstränge die Kettenlaschen mit einer Markierung versehen. Hierbei ist es so, daß stets aus dem Zusammenspiel der Markierung von Innenlasche und Außenlasche sich die Orientierung der Laschen ablesen läßt.

Vorteilhafterweise werden bei der erfindungsgemäßen Energieführungskette an sich bekannte doppelt wirkende Anschläge mit jeweils zwei Anschlagflächen zur Begrenzung der Krümmung des Umlenkbereichs sowie des freitragenden Obertrums verwendet.

Die Erfindung wird nachstehend anhand eines Ausführungsbeispieles unter Bezugnahme auf die zugehörigen Zeichnungen erläutert. Dabei zeigen:
- Fig. 1: einen Teil eines freitragenden Obertrums einer Energieführungskette mit Vorspannung,
- Fig. 2: eine Innenlasche des in Figur 1 dargestellten Kettenteils,
- Fig. 3: eine Außenlasche des in Figur 1 dargestellten Kettenteils,
- Fig. 4: einen Ausschnitt des in Figur 1 dargestellten Kettenteils mit zwei Außenlaschen und einer Innenlasche,
- Fig. 5: einen Teil eines freitragenden Obertrums einer Energieführungskette mit Durchhang,
- Fig. 6: eine Außenlasche des in Figur 5 dargestellten Kettenteils,
- Fig. 7: eine Innenlasche des in Figur 5 dargestellten Kettenteils und
- Fig. 8: einen Ausschnitt des in Figur 5 dargestellten Kettenteils mit zwei Außenlaschen und einer Innenlasche.

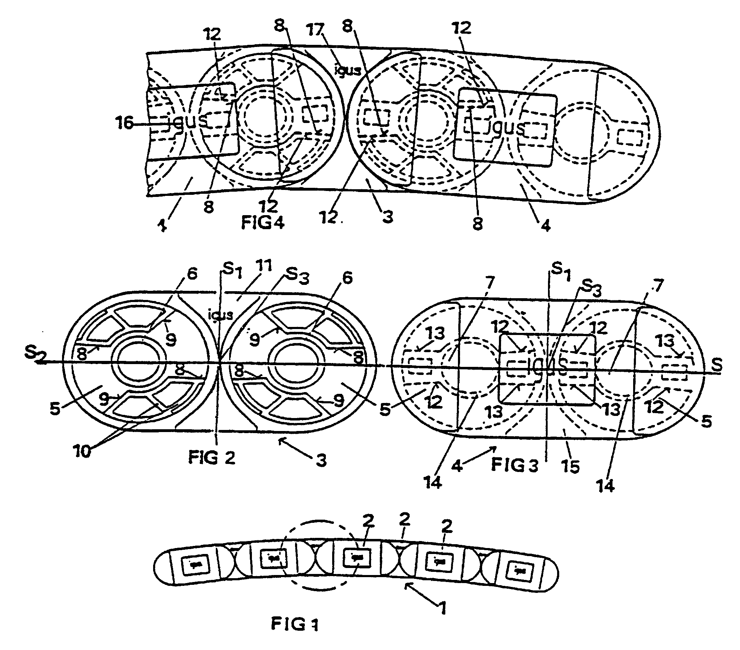

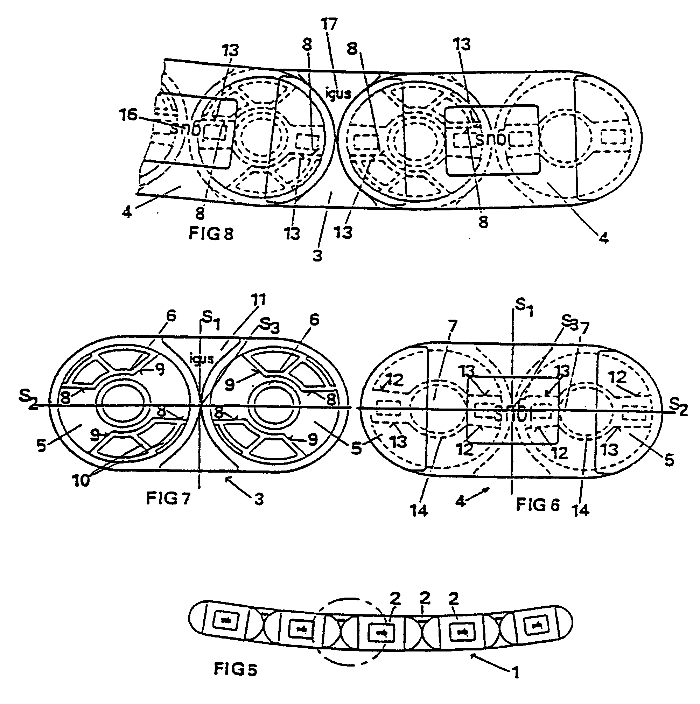

Wie aus den Zeichnungen, insbesondere den Fig. 1 und 5, zu entnehmen ist, besteht die Energieführungskette 1 aus mehreren miteinander zu Strängen verbundenen Kettenlaschen 2. In einem Kettenstrang wechseln sich Innenlaschen 3 und Außenlaschen 4 miteinander ab und sind in den Überlappungsbereichen 5 abwinkelbar gelagert.

Die in Fig. 2 und 7 dargestellte Innenlasche 3 weist im Überlappungsbereich 5 einen kreisförmigen Vorsprung 6 auf. Die Lagerung der Innenlasche 3 in der Außenlasche 4 wird durch die Anordnung des kreisförmigen Vorsprungs 6 in der kreisförmigen Aussparung 7 des Überlappungsbereichs 5 der Außenlasche 4 bewirkt.

Den Figuren kann entnommen werden, daß die Innenlasche 3 und die Außenlasche 4 spiegelsymmetrisch bezüglich der senkrecht zur Kettenlängsrichtung verlaufenden Mittelebene S₁ sind. In den Kettensträngen sind die gegenüberliegenden identischen Kettenlaschen 2 zueinander um 180° um die senkrecht zu den Schwenkachsen verlaufende Mittelachse gedreht angeordnet.

Jeder Überlappungsbereich 5 der Innenlasche 3 weist zwei unterschiedlich orientierte Anschlagflächen 8 und 9 auf. Hierbei ist die erste Anschlagfläche 8 parallel zur Kettenlängsrichtung angeordnet. Die Anschlagfläche 9 schließt einen Winkel mit der Kettenlängsrichtung ein. Beide Anschlagflächen 8 und 9 sind über Rippen 10, die zur Stabilisierung der Anschlagflächen 8 und 9 dienen, miteinander verbunden.

Die Anschlagflächen 8 und 9 stehen ebenso wie der Vorsprung 6 aus dem Überlappungsbereich 5 der Innenlasche 3 hervor. Ebenfalls steht der die Überlappungsbereiche 5 trennende Steg 11 aus der Innenlasche hervor.

Die Außenlasche 4 weist zwei verschieden angeordnete Anschlagflächen 12 und 13 auf. Wie Figuren 3 und 6 zu entnehmen ist, ist hierbei die Anschlagfläche 13 parallel zur Kettenlängsrichtung orientiert. Die Anschlagfläche 12 schließt einen Winkel mit der Kettenlängsrichtung ein. Zur Stabilisierung der Anschlagflächen 12 und 13 sind diese über eine die kreisförmige Aussparung 7 begrenzende Wand 14 miteinander verbunden. Auch die Außenlasche 4 weist einen die beiden Überlappungsbereiche 5 trennenden Steg 15 auf.

Werden Innen- und Außenlasche 3 und 4 so wie in Fig. 4 dargestellt zusammengesetzt, so wird das Abwinkeln der Kettenlaschen gegeneinander durch das Zusammenwirken der Anschlagflächen 9 und 13 bzw. durch die Anschlagflächen 8 und 12 bewirkt. Die Anschlagflächen 8, 9, 12 und 13 sind, indem jeweils zwei paarweise zusammenwirken, als doppelt wirkende Anschläge ausgebildet.

Durch den Anschlag der Flächen 9 und 13 wird der Winkel der Energieführungskette 1 im Umlenkbereich bestimmt. Den Figuren ist zu entnehmen, daß durch die parallele Anordnung der Anschlagfläche 13 in bezug auf die Kettenlängsrichtung der Winkel im Umlenkbereich der Energieführungskette durch den Winkel der Anschlagfläche 9 mit der Kettenlängsrichtung bestimmt ist.

Werden die Innen- und Außenlasche 3 und 4 so wie in Fig. 4 dargestellt abgewinkelt, so wird der Begrenzungswinkel der Abwinkelung durch das Zusammenwirken der Anschlagflächen 8 und 12 definiert. Den Figuren ist zu entnehmen, daß die Laschen 3 und 4 in der gewählten Orientierung einen Kettenstrang ergeben, dessen Obertrum eine Vorspannung aufweist. Der Verlauf des Obertrums wird, da die Anschlagfläche 8 parallel zur Kettenlängsrichtung angeordnet ist, im wesentlichen durch den Neigungswinkel der Anschlagfläche 12 in bezug auf die Kettenlängsrichtung bestimmt.

Wird die Außenlasche 4 in der anderen Orientierung, so wie in Fig. 5 dargestellt, in die Innenlasche 3 eingesetzt, muß sie in der Zeichnungsebene um die Mittelachse S₃ um 180° gedreht werden. Zur leichteren Feststellung der Orientierung der Innen- und Außenlasche 3, 4 sind auf deren von außen sichtbaren Seiten Markierungen 16 und 17 angebracht.

Sind die Innen- und Außenlasche 3 und 4 in der in Fig. 8 dargestellten Orientierung zusammengesetzt, so werden die Begrenzungswinkel der Abwinkelung durch die Orientierung der Anschlagflächen 12 und 9 bzw. 13 und 8 gebildet.

Die Orientierung der'beiden Anschlagflächen 9 und 12 bestimmt hierbei den Radius der Energieführungskette 1 im Umlenkbereich. Durch die geringe Neigung der Anschlagfläche 12 gegenüber der Kettenlängsrichtung ist der Begrenzungswinkel im Umlenkbereich geringfügig kleiner als bei der entsprechend anderen Orientierung der Außenlasche 4. Da die Abweichung von der parallel zur Mittelebene S₂ liegenden Anschlagfläche 13 lediglich geringfügig ist, ist die Veränderung des Umlenkradius minimal, so daß diese tolerierbar ist.

Durch die Orientierung der Anschlagflächen 8 und 13 ist die Abwinkelung zweier Kettenlaschen in die entgegengesetzte Richtung begrenzt. Hierdurch wird die Krümmung des freitragenden Teils des Obertrums bestimmt. Der parallelen Orientierung der Anschlagflächen 8 und 13 in bezug auf die Kettenlängsrichtung ist zu entnehmen, daß das Obertrum einen geometrisch geraden Verlauf hat. Durch die an dem Obertrum angreifenden Gewichtskräfte der Kettenlaschen und der in der Kette geführten Kabel, Schläuche und dergleichen führt diese Orientierung der Anschlagflächen 8 und 13 aufgrund des elastisch nachgiebigen Kunststoffmaterials der Laschen 2 zu einem freitragenden Obertrum mit Durchhang, so wie in Fig. 8 dargestellt.

### Bezugszeichenliste

- 1: Energieführungskette
- 2: Kettenlaschen
- 3: Innenlaschen
- 4: Außenlaschen
- 5: Überlappungsbereich
- 6: kreisförmiger Vorsprung
- 7: kreisförmige Aussparung
- 8: Anschlagfläche
- 9: Anschlagfläche
- 10: Rippen
- 11: Steg
- 12: Anschlagfläche
- 13: Anschlagfläche
- 14: Wand
- 15: Steg
- 16: Markierung
- 17: Markierung
- S1: Mittelebene
- S2: Mittelebene
- S3: Mittelachse

## Patentansprüche

1. Energieführungskette (1) zur Führung von Schläuchen, Kabeln und dergleichen zwischen zwei relativ zueinander beweglichen Anschlußstellen, wobei die Kette ein etwa geradliniges Untertrum aufweist, an das sich ein Umlenkbereich und ein freitragender Bereich des Obertrums anschließt, mit mehreren durch obere und untere Querstege lösbar verbundenen Kettenlaschen (2), die zu zwei parallen Strängen zusammengesetzt sind, wobei sich die Kettenlaschen (2) gegenseitig überlappen sowie um Schwenkachsen abwinkelbar sind, wobei in jedem Laschenstrang als Innenlasche (3) mit innenliegenden Überlappungsbereichen und Außenlasche (4) mit außenliegenden Überlappungsbereichen ausgebildete Kettenlaschen (2) miteinander abwechseln und Innen- (3) und Außenlaschen (4) sich in den parallelen Laschensträngen jeweils gegenüberliegen, in den Überlappungsbereichen (5) aneinander anschließender Kettenlaschen (2) Anschläge mit jeweils ersten Anschlagflächen (9) bzw. (13) zur Begrenzung der Krümmung des Umlenkbereichs und zweiten Anschlagflächen (8, 12) zur Begrenzung der Krümmung des freitragenden Bereichs des Obertrums vorgesehen sind und wobei die Anschlagflächen (8, 9) der Innenlaschen (3) unsymmetrisch in bezug auf eine Spiegelung an der die Schwenkachsen enthaltenden Mittelebene (S₂) angeordnet sind, **dadurch gekennzeichnet, daß** auch die Anschlagflächen (12, 13) der Außenlaschen (4) unsymmetrisch in bezug auf eine Spiegelung an der Mittelebene (S₂) angeordnet sind, so daß bei einer 180°-Umorientierung entweder der Innenlaschen (3) oder der Außenlaschen (4) um die in der Mitte zwischen den beiden Schwenkachsen und zu diesen parallel verlaufende Mittelachse (S₃) der freitragende Teil des Obertrums und/oder der Umlenkbereich eine andere Krümmung aufweist.

2. Energieführungskette nach Anspruch 1, **dadurch gekennzeichnet, daß** die Anschlagflächen (8,9; 12,13) von Innen- (3) und Außenlaschen (4) so unsymmetrisch zur Mittelebene (S₂) angeordnet sind, daß nach einer 180°-Umorientierung entweder der Innenlaschen (3) oder der Außenlaschen (4) um die Mittelachse (S₃) der Umlenkbereich eine geringfügig andere Krümmung aufweist.

3. Energieführungskette nach Anspruch 1 ode 2, **dadurch gekennzeichnet, daß** die Anschlagflächen (8,9; 12,13) spiegelsymmetrisch in bezug auf die senkrecht zur Kettenlängsrichtung verlaufende Mittelebene (S₁) der Kettenlaschen (2) angeordnet sind.

4. Energieführungskette nach einem der Ansprüche 1 bis 3, **dadurch gekennzeichnet, daß** die zur 180°-Umorientierung vorgesehenen Laschen die Außenlaschen sind.

5. Energieführungskette nach Anspruch 4, **dadurch gekennzeichnet, daß** die ersten Anschlagflächen (13) der Außenlaschen (4) parallel und die zweiten Anschlagflächen (12) der Außenlaschen (4) geringfügig geneigt zu der die Schwenkachsen enthaltenden Mittelebene (S₂) angeordnet sind.

6. Energieführungskette nach einem der Ansprüche 1 bis 5, **dadurch gekennzeichnet, daß** auf den außenliegenden Seiten der Laschenstränge die Kettenlaschen (2) mit einer Markierung (16, 17) zur Feststellung der Orientierung der Kettenlaschen (2) in bezug auf die die Schwenkachsen enthaltende Mittelebene (S₂) versehen sind.

7. Energieführungskette nach einem der Ansprüche 1 bis 6, **dadurch gekennzeichnet, daß** doppelt wirkende Anschläge mit jeweils zwei Anschlagflächen (8,9) bzw. (12,13) zur Begrenzung der Krümmung des Umlenkbereichs sowie des freitragenden Obertrums der Kette vorgesehen sind.

## Claims

1. Energy guiding chain (1) for guiding hoses, cables and the like between two connection points relatively movable with respect to each other, said chain comprising a substantially straight lower strand followed by a curved section and a self-supporting upper strand, with several chain straps (2) which are connected to one another via upper and lower crossmembers in detachable fashion and assembled into two parallel strands, and which overlap one another and can be angled around axes of rotation, where chain straps (2) designed as inner straps (3) with inner overlap areas and as outer straps (4) with outer overlap areas alternate with one another in each chain strand, and where the inner and outer straps (3, 4) are respectively opposite to one another in the parallel chain strands, and where stops each comprising first stop surfaces (9) and (13), respectively, for restricting the bending of the curved section and second stop surfaces (8,12) for restricting the bending of the self-supporting section of the upper strand are provided in the overlap areas (5) of adjacent chain strands, and where the stop surfaces (8, 9) of the inner straps (3) are positioned asymmetrically with respect to mirroring at the centre plane (S₂), containing the axes of rotation, **characterised in that** the stop surfaces (12,13) of the outer straps (4) are positioned asymmetrically with respect to mirroring at the centre plane (S₂) such that in case of a change of the orientation of 180° either of the inner straps (3) or of the outer straps (4) around the centre axis (S₃) running in the middle between the two axes of rotation and parallely thereto the self-supporting section of the upper strand and/or the curved section of the chain obtains a different curvature.

2. Energy guiding chain according to claim 1, **characterised in that** the stop surfaces (8, 9; 12, 13) of the inner straps (3) and the outer straps (4) are positioned asymmetrically with respect to the centre plane (S₂) in such a way that after changing the orientation either of the inner straps (3) or of the outer straps (4) about the centre axis (S₃) by an angle of 180° the curved section receives a slightly different curvature.

3. Energy guiding chain according to claim 1 or 2, **characterised in that** the stop surfaces (8, 9; 12, 13) are positioned mirror-symmetrically with respect to the centre axis (S₁) of the chain straps (2) running perpendicular to the longitudinal direction of the chain.

4. Energy guiding chain according to one of the claims 1 to 3, **characterised in that** the chain straps provided for a change of their orientation by an angle of 180° are the outer straps.

5. Energy guiding chain according to claim 4, **characterised in that** the first stop surfaces (13) of the outer straps (4) are positioned parallel and the second stop surfaces (12) of the outer straps (4) are positioned slightly inclined with respect to the centre plane (S₂) containing the axes of rotation.

6. Energy guiding chain according to one of the claims 5 to 6, **characterised in that** the chain straps (2) on the outer sides of the chain strands are provided with at least one marking (16,17) in order to determine the orientation of the chain straps (2) with respect to the centre plane (S₂) containing the axes of rotation.

7. Energy guiding chain according to one of the claims 1 to 6, **characterised in that** double acting stops each comprising two stop surfaces (8,9) and (12, 13), respectively, are provided for restricting the angling of the curved section as well as the self-supporting upper strand of the chain.

## Revendications

1. Chaîne d'alimentation en énergie (1) pour mener des tuyaux, des câbles et similaires entre deux emplacements de raccordement mobiles l'un par rapport à l'autre, la chaîne comprenant un brin inférieur approximativement rectiligne auquel se raccordent une zone de renvoi et une zone en suspension libre du brin supérieur, comportant plusieurs éclisses de chaîne (2) reliées de façon détachable les unes aux autres par des barrettes supérieures et inférieures et regroupées pour former deux lignes parallèles, dans laquelle les éclisses de chaîne (2) se chevauchent mutuellement et peuvent être coudées autour d'axes de pivotement, les éclisses de chaîne (2) réalisées à titre d'éclisses intérieures (3) avec des zones de chevauchement intérieures et à titre d'éclisses extérieures (4) avec des zones de chevauchement extérieures alternent mutuellement dans chaque ligne d'éclisses, et les éclisses intérieures (3) et les éclisses extérieures (4) se font face dans les lignes d'éclisses parallèles, des butées comportant chacune des premières surfaces de butée (9) ou (13) pour limiter la courbure de la zone de renvoi et des deuxièmes surfaces de butée (8, 12) pour limiter la courbure de la zone en suspension libre du brin supérieur sont prévues dans les zones de chevauchement (5) d'éclisses de chaîne (2) raccordées les unes aux autres, et les surfaces de butée (8, 9) des éclisses intérieures (3) sont agencées de façon asymétrique par rapport à un plan médian (S₂) contenant les axes de pivotement, **caractérisée en ce que** les surfaces de butée (12, 13) des éclisses extérieures (4) sont également agencées de façon asymétrique par rapport au plan médian (S₂), de sorte que lors d'une réorientation de 180° soit des éclisses intérieures (3) soit des éclisses extérieures (4) autour de l'axe médian (S₃) s'étendant au milieu entre les deux axes de pivotement et parallèlement à ceux-ci, la partie en suspension libre du brin supérieur et/ou la zone de renvoi présente une autre courbure.

2. Chaîne d'alimentation en énergie selon la revendication 1, **caractérisée en ce que** les surfaces de butée (8, 9 ; 12, 13) des éclisses intérieures (3) et des éclisses extérieures (4) sont agencées de façon asymétrique par rapport au plan médian (S₂), de telle sorte qu'après une réorientation de 180° soit des éclisses intérieures (3) soit des éclisses extérieures (4) autour de l'axe médian (S₃), la zone de renvoi présente une courbure légèrement différente.

3. Chaîne d'alimentation en énergie selon l'une ou l'autre des revendications 1 et 2, **caractérisée en ce que** les surfaces de butée (8, 9 ; 12, 13) sont agencées à symétrie par rapport au plan médian (S₁) des éclisses de chaîne (2), qui s'étend perpendiculairement à la direction longitudinale de la chaîne.

4. Chaîne d'alimentation en énergie selon l'une des revendications 1 à 3, **caractérisée en ce que** les éclisses prévues pour la réorientation de 180° sont les éclisses extérieures.

5. Chaîne d'alimentation en énergie selon la revendication 4, **caractérisée en ce que** les premières surfaces de butée (13) des éclisses extérieures (4) sont agencées parallèlement par rapport au plan médian (S₂) contenant les axes de pivotement, et les deuxièmes surfaces de butée (12) des éclisses extérieures (4) sont agencées de façon légèrement inclinée par rapport audit plan.

6. Chaîne d'alimentation en énergie selon l'une des revendications 1 à 5, **caractérisée en ce que** sur les côtés extérieurs des lignes d'éclisses, les éclisses de chaîne (2) sont pourvues d'un marquage (16, 17) pour définir l'orientation des éclisses de chaîne (2) par rapport au plan médian (S₂) contenant les axes de pivotement.

7. Chaîne d'alimentation en énergie selon l'une des revendications 1 à 6, **caractérisée en ce qu'**il est prévu des butées à double effet comportant chacune deux surfaces de butée (8, 9) ou (12, 13) pour limiter la courbure de la zone de renvoi ainsi que du brin supérieur en suspension libre de la chaîne.
